Europäisches Patentamt

European Patent Office

Office européen des brevets

(19)

(11) **EP 0 915 140 A1**

(12) **EUROPÄISCHE PATENTANMELDUNG**

(43) Veröffentlichungstag:
   **12.05.1999 Patentblatt 1999/19**

(51) Int. Cl.⁶: **C09G 1/08**

(21) Anmeldenummer: 98120279.9

(22) Anmeldetag: 27.10.1998

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **04.11.1997 DE 19748600**

(71) Anmelder:
   **Chemtec Leuna Gesellschaft für Chemie und Technologie mbH**
   **06234 Leuna (DE)**

(72) Erfinder:
   • **Klimek, Irene**
     **06122 Halle (DE)**
   • **Zwinzscher, Margarete**
     **39112 Magdeburg (DE)**
   • **Adler, Peter, Dr**
     **06254 Kötschlitz (DE)**
   • **Hommel, Winfried**
     **06217 Merseburg (DE)**

(74) Vertreter:
   **Schinke, Herbert, Dr. Dr.,**
   **Patentanwaltskanzlei**
   **Postfach 11 11**
   **06236 Leuna (DE)**

(54) **Wasserverdünnbare Holzdecorlasur für den Innenbereich und Verfahren zur Herstellung**

(57)    Die Erfindung betrifft eine wasserverdünnbare Holzdecorlasur für den Innenbereich auf Wachs/Pflanzenöl-Basis und Verfahren zu deren Herstellung.

   Die wasserverdünnbare Holzdecorlasur für den Innenbereich, die mit Alkalien modifiziertes Wachs, trocknendes Pflanzenöl, Fettsäuren, Füllstoffe und/oder Pigmente enthält, ist gekennzeichnet durch folgende Zusammensetzung:

   a) 50 bis 80 Gewichts-% einer wäßrigen Wachs(mit Alkalien modifiziert)/Fettsäure/Pflanzenöl-Emulsion (Bindemittel) mit einem Festkörpergehalt von 20 bis 35 Gewichts-% und 80 bis 65 Gewichts-% Wasseranteil,
   b) 0 bis 5 Gewichts-% Füllstoffe,
   c) 0,5 bis 5 Gewichts-% Pigmente,
   d) Rest (auf 100 Gewichts-%) Wasser.

   Die erfindungsgemäße Holzdecorlasur zeichnet sich insbesondere durch sehr gute Verarbeitung und Benetzung der Holzoberfläche aus.
   Die Oberfläche ist mattglänzend und hat einen wachsartigen Griff.

EP 0 915 140 A1

**Beschreibung**

Die Erfindung betrifft eine wasserverdünnbare Holzdecorlasur für den Innenbereich auf Wachs/Pflanzenöl-Basis und Verfahren zu deren Herstellung.

Die Oberflächenbehandlung von Holz mit Wachsen hat eine lange Tradition.

Reines Bienenwachs wird beispielsweise seit jeher für nicht beanspruchte Oberflächen von Möbeln eingesetzt. Widerstandsfähigere Beschichtungen sind mit Carnaubawachs, gewonnen aus Wachspalmblättern, mit mineralischen Erdwachsen oder modernen synthetischen Wachsen möglich. Dennoch bleiben die Wachsüberzüge relativ kratzempfindlich und sind chemisch nicht sehr beständig.

Seit mehreren Jahren sind Beschichtungsstoffe aus Mischungen von Wachsen und pflanzlichen Ölen erhältlich, die wesentlich verbesserte Eigenschatten aufweisen. Die aushärtenden Öle bilden in Verbindung mit den Wachsen eine wisch- bis scheuerbeständige Beschichtung, die gegen Haushaltschemikalien relativ unempfindlich ist.

Zur Vermeidung von Gesundheits- und Umweltbelastungen werden jedoch zunehmend wasserverdünnbare lösungsmittelarme bis lösungsmittelfreie Holzlasuren, insbesondere wenn es sich um Holzlasuren für den Innenbereich handelt, gefordert.

Wasserverdünnbare Anstrichstoffe sind als Dispersions- oder Emulsionsfarben mit unterschiedlichster Zusammensetzung bekannt.

So ist aus der DE 43 38 110 ein wasserverdünnbares, lasierendes Anstrichmittel bekannt, das Alkalien, Harze, natürliche Öle, deren Verseifungsprodukte, bis 10 % natürliche Wachse, bis 30 % Pigmente, bis 30 % Füllstoffe und als Rest Wasser enthält. Als natürliche Wachse kommen Bienenwachs und Carnaubawachs zum Einsatz.

Die Herstellung der Lasuren erfolgt dabei in einfacher Weise so, daR man zunächst die Harze und/oder Wachse verflüssigt und dann nach und nach die flüssigen Komponenten unter Rühren zudosiert. Oder man legt das Lösungsmittel vor und dosiert die restlichen Komponenten der Reihe nach zu, wobei vor Zugabe der jeweils nächsten Komponente das Gemisch bis zur Homogenität gerührt wird (DE 40 20 495).

Eine andere Form des Einbringens von Wachsen als über den schmelzflüssigen Zustand ist das Eintragen von wäßrigen Dispersionen in die wäßrige Lasurrezeptur. Die Wachse erfüllen hierbei aber lediglich die Funktion eines Additivs zur gezielten Eigenschaftsverbesserung und stellen nicht die Basis (Bindemittel) der Lasur dar. So ist aus der DE 43 30 342 eine wäßrige Polyolefindispersion bekannt, die 5 bis 65 Gew.% PE- oder PP-Wachs mit einer Säurezahl < 5 enthält, und u. a. in wäßrigen Holzlasuren zur Verbesserung der Gleiteigenschaften oder der Scheuerfestigkeit verwendet wird.

Eine andere Variante der Herstellung von lösungsmittelfreien bzw. wasserverdünnbaren Lasuren, die in der Farben- und Lackindustrie praktiziert wird, ist z. B. in „Kronos Titandioxid in Dispersionsfarben", Herausgeber Kronos Titan-GmbH, Leverkusen, 1989 beschrieben. Dabei wird bei der Herstellung der Lasur nach der Pigmentpastentechnologie wie folgt verfahren:

1. Bindemittel wird vorgelegt, Füllstoffe (Kreise, Talkum etc.) werden eingetragen und gut vermischt.
2. Die Pigmentsuspension wird eingetragen und bei ca. 2 000 U/min dispergiert. Dadurch wird eine Pigment-Füllstoff-Paste erzeugt.
3. In diese Pigment-Füllstoff-Paste wird das Lösungsmittel bzw. das Wasser eingetragen und gut verteilt.

Aus der DE 40 24 925 ist ein Bindemittel zur Verwendung bei Farben und Lacken bekannt, das ein Pflanzenöl, ein Pflanzenharz, Alkalien, Casein und Wasser enthält. Als Pflanzenharz wird vorzugsweise Schellack oder Kollophonium eingesetzt.

Natürliche Wachse und Harze sind jedoch in ihrem Aufkommen begrenzt. Ihre Qualitäten schwanken stark, und ihre Eigenschaften, wie Molmasse, Funktionalität, lassen sich nicht maßgeschneidert anpassen. Zudem neigen die o.g. Rezepturen nach einer gewissen Zeit zum Absetzen der Wasserphase, so daß vor dem jeweiligen Gebrauch erst wieder aufgerührt werden muß oder zusätzliche Additive/Verdicker verwendet werden müssen.

Ziel ist es daher, eine Holzdecorlasur zu entwickeln, die auch nach langen Standzeiten homogen bleibt, die Einsatzprodukte, insbesondere die verwendeten Wachse, jederzeit verfügbar sind und die Qualitäten, wie Härte, Funktionalität und Retentionsverhalten gezielt eingestellt werden können. Ferner sollen die Rezepturbestandteile reduziert werden können, insbesondere durch Wegfall von metallhaltigen Härtern und/oder Verträglichkeitsvermittlern. Zudem soll sie den Ansprüchen des biologischen Werkstoffs Holz voll gerecht werden, leicht herzustellen und insbesondere sehr gute Verarbeitungseigenschaften und eine hohe Stabilität besitzen.

Die Aufgabe besteht darin, eine wasserbasierende Holzlasur mit baubiologisch hochwertigen Eigenschaften, wie offenporige und wasserdampfaufnahmefähige Filmbildung herzustellen, die aus physiologisch unbedenklichen Rohstoffen, insbesondere unter Verwendung von Wachsen, gefertigt werden kann.

Diese Aufgabe wird gelöst durch eine wasserverdünnbare Holzdecorlasur, die durch folgende Zusammensetzung gekennzeichnet ist:

a) 50 bis 80 Gewichts-% einer wäßrigen mit Alkalien modifizierten Wachs-/Fettsäure/Pflanzenöl-Emulsion (Bindemittel) mit einem Festkörpergehalt von 20 bis 35 Gewichts-% und 80 bis 65 Gewichts-% Wasseranteil,

b) 0 bis 5 Gewichts-% Füllstoffe,

c) 0,5 bis 5 Gewichts-% Pigmente,

d) Rest (auf 100 Gewichts-%) Wasser,

e) ggf. zusätzlich ein wasserverdünnbares Alkydharz im Verhältnis von Komponenten a) zu Alkydharz wie 2 : 1 (Cobindemittel).

Der Festkörper des Bindemittels der Wachs/Pflanzenöl-Emulsion setzt sich vorzugsweise wie folgt zusammen:

- 30 bis 55 Gewichts-% modifiziertes Wachs,
- 20 bis 60 Gewichts-% Pflanzenöle mit ungesättigten Fettsäuren, vorzugsweise Leinöl.
- 5 bis 15 Gewichts-% ungesättigte Fettsäuren mit C-Zahlen im Bereich von C14 bis C22.

Als modifiziertes Wachs kommt insbesondere ein Kohlenwasserstoff mit sauerstoffhaltigen funktionellen Gruppen, welches Molmassen von 500 bis 2000 und molekulare Uneinheitlichkeiten von < 0,5 aufweist, zum Einsatz. Die molekulare Uneinheitlichkeit wird als

$$U = \frac{M_w}{M_n} - 1$$

definiert, wobei $M_w$ die mittlere massebezogene Molmasse
und $M_n$ die mittlere molzahlbezogene Molmasse
bedeuten.

Es können Polyolefinwachse, wie Polyethylen- oder Polypropylenwachse, die nach den verschiedensten Syntheseverfahren aus den Monomeren gezielt hergestellt worden sind, durch thermische Behandlung von Polymeren gewonnene niedermolekulare Kohlenwasserstoffe oder aus Synthesegas nach dem Fischer-Tropsch-Verfahren hergestellte Wachse verwendet werden.

Zur Erhöhung der Härte der Wachse kann der niedermolekulare Anteil destillativ, durch Strippen oder extraktiv entfernt werden. Diese Wachse werden nach ihrer Herstellung vorzugsweise im schmelzflüssigen Zustand mit Luft oder Sauerstoff oxidiert. Hierbei bilden sich Wachsoxidate mit polaren funktionellen Gruppen wie Säuregruppen, die für die Emulgierbarkeit in wäßrigen Medien essentiell sind.

Die an der Wachsmatrix enthaltenen Säuregruppen werden mittels Alkalien im stöchiometrischem Verhältnis verseift. Als Alkalien können die an sich bekannten Substanzen verwendet werden wie Ammoniak, Diethanolamin, Triethalolamin, Aminomethylpropanol, Morpholin oder Natrium-, Kalium- oder Lithiumhydroxyd.

Vorzugsweise kommen Triethanolamin oder Natriumhydroxyd zur Anwendung.

Als Pflanzenöle können Leinöl, Ricinusöl, Holzöl sowie deren Standöle verwendet werden. Vorzugsweise kommt Leinöl zum Einsatz.

Als ungesättigte Fettsäuren können ein- oder mehrfach ungesättigte Fettsäuren mit C-Zahlen im Bereich von C14 bis C22 verwendet werden. Die Fettsäuren dienen einerseits zur Erhöhung der Dispergierwirkung, andererseits ermöglichen sie in Kombination mit den trocknenden Ölen und Wachsen den Wegfall zusätzlicher Härter

Als Füllstoffe können Kreide. Talkum und an sich bekannte Stoffe hierfür verwendet werden.

Auch als Pigmente werden die dafür an sich bekannten eingesetzt.

Die erfindungsgemäße Holzdecorlasur wird vorzugsweise nach der an sich bekannten Pastentechnologie erfindungsgemäß wie folgt gefertigt:

In einem Behälter mit Rührscheibe wird etwa die Hälfte des einzusetzenden Bindemittels (Wachs/Pflanzenöl/Fettsäure-Emulsion) vorgelegt,

anschließend werden die Füllstoffe eingetragen und gut vermischt,

danach werden die Pigmente eingetragen und einige Minuten hochtourig (> 500 U/Min) zu einer Füllstoff-Pigment-Paste dispergiert,

die restlichen Anteile (etwa zweite Hälfte) der Wachs/Pflanzenöl/Fettsäure-Emulsion zudosiert,

ggfs. das Alkydharz zugegeben und homogenisiert,

abschließend wird bei laufendem Rührwerk das restliche Wasser zugegeben.

Die so hergestellte Lasur ist nach ca. 1 Stunde gebrauchsfähig.

Das Bindemittel, die Komponente a) der Holzlasur, wird wie folgt hergestellt:

Als Wachs wird ein Kohlenwasserstoff mit sauerstoffhaltigen funktionellen Gruppen, welcher Molmassen von 300 bis 2000 und molekulare Uneinheitlichkeiten von ≤ 0,5 aufweist, eingesetzt. Die an der Wachsmatrix enthaltenen Säuregruppen werden mittels Alkalien in stöchiometrischem Verhältnis durch Umsetzung in der Schmelze verseift. Anschließend wird das modifizierte Wachs bei einer Temperatur von 95 bis 120 °C mit Pflanzenöl und Fettsäure innig homogenisiert und danach einer inline-Homogenisiermaschine zugeführt, in die parallel dazu auf etwa gleiche Temperatur gebrachtes demineralisiertes Wasser zugeführt wird.

Durch die Art der Bindemittelzubereitung wird ein Mizellen-Aufbau erreicht. Das heißt, die Komponenten Wachs, Leinöl und Fettsäure sind in der wäßrigen Emulsion feinstverteilt und liegen in einer bestimmten Ordnung in den Teilchen vor. Daraus resultiert zum einen eine sehr gute Langzeitstabilität des Bindemittels und der daraus gefertigten Emulsion, zum anderen ist eine gute Homogenität der Holzdecorlasur gewährleistet.

Die erfindungsgemäße Holzdecorlasur zeichnet sich insbesondere durch sehr gute Verarbeitung und Benetzung der Holzoberfläche aus. Durch die bewußte Rohstoffwahl genießt sie alle Vorzüge einer wasserverdünnbaren, umweltfreundlichen und physiologisch unbedenklichen Lasur.

Die Oberfläche ist mattglänzend und hat einen wachsartigen Griff. Sie läßt sich weiterhin leicht durch Nachpolieren wieder auffrischen.

Die Erfindung soll an nachfolgenden Beispielen erläutert werden, ohne darauf beschränkt zu sein:

**Beispiele 1 und 2 (Herstellung des Bindemittels)**

Die verwendeten Rohstoffe zur Herstellung des erfindungsgemäßen Bindemittels sind in der Tabelle 1 zusammengefaßt:

**Tabelle 1: Verwendete Einsatzprodukte zur Herstellung des Bindemittels**

| Komponente | Beispiel 1 | | Beispiel 2 | |
|---|---|---|---|---|
| | Gew.% | Art und physik.-chemische Charakterisierung | Gew.% | Art und physik.-chemische Charakterisierung |
| - Wachs | 15,75 | oxidiertes Polyethylenwachs<br>Molmasse: 1150<br>Uneinheitlichkeit: 0,48<br>Säurezahl: 31 mg KOH/g | 13,5 | oxidiertes Fischer/Tropsch-Wachs<br>Molmasse: 611<br>Uneinheitlichkeit: 0,3<br>Säurezahl: 25,3 mg KOH/g |
| - Modifikator | | Triethanolamin im stöchiometrischen Verhältnis zur Säurezahl | | Natriumhydroxid im stöchiometrischen Verhältnis zur Säurezahl |
| - Pflanzenöl | 14 | Leinöl roh, Jodzahl: 165 | 15 | Leinöl-Standöl |
| - Fettsäure | 5,25 | Ölsäure | 1,5 | Erucasäure |
| - Wasser | zu 100 % | demineralisiertes Wasser (Reinstkondensat; Leitfähigkeit < 3 µm) | zu 100 % | demineralisiertes Wasser (Reinstkondensat; Leitfähigkeit < 3 µm) |

In einem heiz- und kühlbaren 50 l-Rührreaktor wird zunächst 30 kg des Wachsoxidates mit der entsprechenden Menge Anverseifungsmittel bei 110 bis 120 °C modifiziert. Die Reaktionszeit beträgt ca. 20 min. Anschließend werden rezepturgemäß Pflanzenöl und Fettsäure dazugegeben und bei der o.g. Temperatur bis zur Homogenität gerührt.

Der so hergestellte Emulsionsgrundkörper wird bei 120 °C und 3 bis 4 bar (ü) in einer Rotor-Stator-Emulgiermaschine mit Wasser zu einer 20 bis 35%igen Emulsion verarbeitet.

**Beispiele 3 bis 5 (Herstellung der Holzdecorlasur)**

Beispiel 3

| - Wachs/Leinöl-Emulsion aus Beispiel 1 | 79,0 Gew.% |
|---|---|
| - Eisenoxid gelb PW 895 | 1,0 Gew.% |
| - Wasser | 20,0 Gew.% |
| | 100,0 Gew.% |

Beispiel 4

| - Wachs/Leinöl-Emulsion aus Beispiel 2 | 77,0 Gew.% |
|---|---|
| - Kreide/Talkum | 2,0 Gew.% |
| - Eisenoxid rot | 1,0 Gew.% |
| - Wasser | 20,0 Gew.% |
| | 100,0 Gew.% |

Beispiel 5

| - Wachs/Leinöl-Emulsion aus Beispiel 1 | 50,0 Gew.% |
|---|---|
| - wasserverdünnbares Alkydharz* | 25,0 Gew.% |
| - Kreide/Talkum | 2,0 Gew.% |
| - Ruß-Suspension | 1,0 Gew.% |
| - Wasser | 22,0 Gew.% |
| | 100,0 Gew.% |

* oxidativtrocknendes Alkydharz, urethanmodifiziert; in wäßriger Emulsionsform

Als Farbpigmente kamen wäßrige Eisenoxid-Dispersionen zum Einsatz.

Die labortechnischen Versuchsansätze der Rezeptur-Formulierungen wurden wie folgt hergestellt:

1. In einem Behälter mit Rührscheibe, dessen Durchmesser Behälter : Rührscheibe = 2 : 1 beträgt, wird die Hälfte der Wachsemulsion vorgelegt und mit den eingetragenen Füllstoffen Kreide (und/oder Talkum) gut vermischt und unter laufendem Rührwerk verrührt,

2. Pigmente: Eisenoxid Gelb oder Eisenoxid Rot oder Ruß-Suspension werden eingetragen und 2 bis 5 Minuten unter laufendem Rührwerk mit einer Rührgeschwindigkeit von 800 U/Min zur Füllstoff-Pigment-Paste dispergiert,

3. restliche Anteile Wachsemulsion und ggfs. Alkydharz werden eingetragen und unter laufendem Rührwerk homogen verteilt,

4. Wasser wird zugegeben, der Ansatz wird 1 Stunde ruhen gelassen.

Testung der Holzdecorlasur

Die Lasur mit der erfindungsgemäßen Rezeptur gemäß Beispiel 5 wurde mit einer Lasur, gefertigt gemäß Beispiel 1 der DE 43 38 110, verglichen. Getestet wurde das Sedimentationsverhalten und die Verarbeitbarkeit.

Die Bestimmung des Sedimentationsverhaltens erfolgte nach Einfüllen einer homogenisierten Probe in einen 50 ml-Standzylinder, worin über 4 Wochen das Sedimentationsverhalten des Beschichtungsstoffes visuell und zahlenmäßig (Phasentrennungsanteile) verfolgt wurde.

Tabelle 2

| Prüfergebnisse Sedimentationsverhalten | | |
|---|---|---|
| Ansätze | Sedimentation über 4 Wochen | |
| | visuell | überstehendes Serum |
| Vergleichsbeispiel (DE 43 38 110) | Bodensatz, Serum | 31 |
| erfindungsgemäße Lasur gemäß Rezepturbeispiel 5 | kein Bodensatz | 0 |

Die Tabelle 3 zeigt die Ergebnisse bei der Verarbeitung der Holzlasuren.

Tabelle 3

| Praktische Prüfungen der Lasur nach DE 43 38 110 und gemäß Beispiel 5 | | |
|---|---|---|
| | DE 43 38 110 | Beispiel 5 |
| **1. Verarbeitbarkeit** | | |
| **Streichen 1. Schicht** | zufriedenstellend | sehr gut |
| Bewertung: | (schäumend und zusammenlaufend) | |
| **Streichen 2. + 3. Schicht** | gut | sehr gut |
| Bewertung: | (etwas schäumend und zuammenlaufend) | |
| **2. Spritzneigung** | | |
| Bewertung: | mittel | kaum/gering |
| **3. Tropf- und Laufneigung** | | |
| Bewertung: | mittlere | keine/gering |
| **4. visuelle Beurteilung des Anstrichs (trocken)** | | |
| Trocknungsbedingungen: 18 °C bis 20 °C und 50 bis 55% rel. LF | | |
| Trocknung | zufriedenstellend (nach 3 h noch klebrig) | gut (nach 3 h griffest) |
| Verlauf | zufriedenstellend (leicht grisselig) | sehr gut |
| Gleichmäßigkeit | zufriedenstellend (glänzende Oberfläche, Holzmaserung gut erkennbar) | sehr gut (nach Polieren mit fusselfreiem Tuch, seidenglänzende Oberfläche, Holzmaserung gut erkennbar) |
| **5. Geruchsbelästigung** | | |
| Bewertung | stark/sehr stark | gering |

**Patentansprüche**

1. Wasserverdünnbare Holzdecorlasur für den Innenbereich, die mit Alkalien modifiziertes Wachs, trocknendes Pflanzenöl, Fettsäuren, Füllstoffe und/oder Pigmente enthält, gekennzeichnet durch folgende Zusammensetzung:

   a) 50 bis 80 Gewichts-% einer wäßrigen Wachs (mit Alkalien modifiziert)/Fettsäure/Pflanzenöl-Emulsion (Bindemittel) mit einem Festkörpergehalt von 20 bis 35 Gewichts-% und 80 bis 65 Gewichts-% Wasseranteil,
   b) 0 bis 5 Gewichts-% Füllstoffe,
   c) 0,5 bis 5 Gewichts-% Pigmente,
   d) Rest (auf 100 Gewichts-%) Wasser,
   e) ggf. zusätzlich ein wasserverdünnbares Alkydharz im Verhältnis von Komponenten a) zu Alkydharz wie 2 : 1 (Cobindemittel).

2. Holzdecorlasur nach Anspruch 1, dadurch gekennzeichnet, daß der Festkörper des Bindemittels a) wie folgt zusammengesetzt ist:

   - 30 bis 55 Gewichts-% modifiziertes Wachs,
   - 20 bis 60 Gewichts-% Pflanzenöle mit ungesättigten Fettsäuren,
   - 5 bis 15 Gewichts-% ungesättigte Fettsäuren mit C-Zahlen im Bereich von C14 bis C22.

3. Holzdecorlasur nach Anspruch 1 und 2, dadurch gekennzeichnet, daß als modifiziertes Wachs ein Kohlenwasserstoff mit sauerstoffhaltigen funktionellen Gruppen, welcher Molmassen von 500 bis 2000 und molekulare Uneinheitlichkeiten von ≤ 0,5 aufweist, eingesetzt wird, wobei die an der Wachsmatrix enthaltenen Säuregruppen mittels Alkalien in stöchiometrischem Verhältnis verseift sind.

4.   Verfahren zur Herstellung der Holzdecorlasur für den Innenbereich, nach einem oder mehreren der Ansprüche 1 bis 3, dadurch gekennzeichnet, daß

-   in einem Behälter mit Rührscheibe etwa die Hälfte des einzusetzenden Binde
-   mittels (Wachs/Pflanzenöl/Fettsäure-Emulsion) vorgelegt wird,
-   anschließend die Füllstoffe eingetragen und gut vermischt werden,
-   danach die Pigmente eingetragen und einige Minuten hochtourig (> 500 U/Min) zu einer Füllstoff-Pigment-Paste dispergiert werden,
-   die restlichen Anteile (etwa zweite Hälfte) der Wachs/Pflanzenöl/Fettsäure-Emulsion zudosiert werden,
-   ggfs. das Alkydharz zugegeben und homogenisiert wird und
-   abschließend bei laufendem Rührwerk das restliche Wasser zugegeben wird.

5.   Verfahren zur Herstellung des Bindemittels (Wachs/Pflanzenöl/Fettsäure-Emulsion) der wasserverdünnbaren Holzdecorlasur für den Innenbereich nach Anspruch 4, dadurch gekennzeichnet,

-   daß als Wachs ein Kohlenwasserstoff mit sauerstoffhaltigen funktionellen Gruppen, welcher Molmassen von 500 bis 2000 und molekulare Uneinheitlichkeiten von ≤ 0,5 aufweist, eingesetzt wird,
-   die an der Wachsmatrix enthaltenen Säuregruppen mittels Alkalien in stöchiometrischem Verhältnis durch Umsetzung in der Schmelze verseift werden
-   anschließend bei einer Temperatur von 95 bis 120 °C mit Pflanzenöl und Fettsäure innig homogenisiert und
-   danach einer inline-Homogenisiermaschine zugeführt wird,
-   in die parallel dazu auf etwa gleiche Temperatur gebrachtes demineralisiertes Wasser zugeführt wird.

**Europäisches Patentamt**

# EUROPÄISCHER RECHERCHENBERICHT

Nummer der Anmeldung

EP 98 12 0279

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,X | EP 0 652 270 A (AURO PLANZENCHEMIE) 10. Mai 1995 * Seite 2, Spalte 2, Zeile 2 - Seite 4, Spalte 2, Zeile 13; Ansprüche 1-9 * --- | 1 | C09G1/08 |
| A | DE 94 12 715 U (LEUNA-WERKE) 6. Oktober 1994 * Seite 2, Zeile 1 - Seite 5, Zeile 17; Ansprüche 1-10 * --- | 1 | |
| A | DE 19 43 958 A (VEBA-CHEMIE) 11. März 1971 * Seite 2, Zeile 9 - Seite 3, Zeile 15; Ansprüche 1-3 * --- | 1 | |
| A | US 3 160 621 A (HAGEMEYER ET AL) 8. Dezember 1964 * Spalte 1, Zeile 57 - Spalte 2, Zeile 61; Ansprüche * --- | 1 | |
| D,A | DE 43 30 342 A (BASF) 9. März 1995 * Seite 1, Spalte 1, Zeile 1 - Seite 2, Spalte 4, Zeile 7 * ----- | 1 | RECHERCHIERTE SACHGEBIETE (Int.Cl.6) C09G |

Der vorliegende Recherchenbericht wurde für alle Patentansprüche erstellt

| Recherchenort | Abschlußdatum der Recherche | Prüfer |
|---|---|---|
| DEN HAAG | 12. Januar 1999 | Bourgonje, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 98 12 0279

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-01-1999

| Im Recherchenbericht angeführtes Patentdokument | | Datum der Veröffentlichung | Mitglied(er) der Patentfamilie | | Datum der Veröffentlichung |
|---|---|---|---|---|---|
| EP 652270 | A | 10-05-1995 | DE | 4338110 A | 11-05-1995 |
| DE 9412715 | U | 06-10-1994 | KEINE | | |
| DE 1943958 | A | 11-03-1971 | KEINE | | |
| US 3160621 | A | 08-12-1964 | KEINE | | |
| DE 4330342 | A | 09-03-1995 | AT | 167209 T | 15-06-1998 |
| | | | CN | 1133055 A | 09-10-1996 |
| | | | DE | 59406233 D | 16-07-1998 |
| | | | WO | 9507313 A | 16-03-1995 |
| | | | EP | 0717758 A | 26-06-1996 |
| | | | JP | 9502216 T | 04-03-1997 |
| | | | US | 5746812 A | 05-05-1998 |

EPO FORM P0461

Für nähere Einzelheiten zu diesem Anhang : siehe Amtsblatt des Europäischen Patentamts, Nr.12/82